# EUROPEAN PATENT SPECIFICATION

(11) **EP 3 956 202 B1**
(45) Date of publication and mention of the grant of the patent: **13.03.2024**
(21) Application number: 20720143.5
(22) Date of filing: 16.04.2020
(51) Int. Cl.: B62D 21/02, B62D 21/14, B62D 21/12

(54) **VEHICLE COMPRISING A CHASSIS ASSEMBLY AND METHOD OF ADJUSTING THE LENGTH THEREOF**
FAHRZEUG MIT EINER FAHRGESTELLANORDNUNG UND VERFAHREN ZUM EINSTELLEN DER LÄNGE DAVON
VÉHICULE COMPRENANT UN ENSEMBLE CHÂSSIS ET PROCÉDÉ DE RÉGLAGE DE SA LONGUEUR

(30) Priority: 17.04.2019 NL 2022967
(43) Date of publication of application: 23.02.2022
(73) Proprietor: Terberg Benschop B.V., 3405 XK Benschop (NL)
(72) Inventor: VAN ZOELEN, Ronald Cornelis Johannes, Nieuwegein (NL)
(74) Representative: Arnold & Siedsma
(86) International application number: PCT/NL2020/050253
(87) International publication number: WO 2020/214031

(56) References cited:
- WO-A1-2008/078139
- CA-A- 1 049 062
- CN-A- 102 730 065
- DE-B3- 10 300 393
- GB-A- 2 264 468

## Description

The present invention relates to vehicle comprising a chassis assembly and to a method of adjusting the length of such a vehicle.

Applicant is manufacturer of a variety of special vehicles for industrial markets, such as roro tractors for ports, yard tractors used at distribution centers and/or container ports, tractors for transporting large industrial loads, road/rail tractors and vehicles dedicated for tunnels under construction.

A manufacturer that offers such a variety of special vehicles, wherein each type of special vehicle may also be commercially available in different versions, is confronted with challenges in logistics and stock of parts. One of the parts of a vehicle is its chassis, which is a relatively large component.

A manufacturer of special vehicles has to make use of heavy duty welded chassis assemblies due to load requirements instead of bolted chassis as used for conventional road trucks. Since each individual customer requires a specific wheelbase for his or her vehicles, such chassis become production order specific and can not be produced in large volumes whereby robots can be used. Conventional road truck chassis make use of longitudinal U-shaped main beams which are bolted together with cross beams during the assembly of the vehicle.

There is a need to improve the versatility of manufacturing of a vehicle chassis that may be production order specific in dimensions, thereby maintaining optimal flexibility to meet consumer demands in ever-decreasing delivery times.

CA 1 049 062 A, which is considered to constitute the closest prior art, discloses a dump truck provided with a supplementary axle assembly displaceable behind the conventional rear axle assembly lengthwise of the truck chassis. The dump truck comprises a supplementary frame with a supplementary axle assembly. The supplementary frame is slidably mounted relative to the main chassis to thereby position the supplementary axle lengthwise of the truck chassis at a desired length behind the conventional rear axle assembly. In this way, payload rating of the dump truck may be temporarily increased. In the retracted position the supplementary axle is arranged under the rear of the conventional chassis for unhindered dumping operation. The dump truck of CA 1 049 062 A thus discloses a chassis assembly, comprising at least one runner configured to support a first set of wheels, and at least one variable extension configured to: adjust a resulting length of the vehicle; at least partially support a second set of wheels; and adjust a wheelbase between the first set of wheels and the second set of wheels. At least the characterizing features of independent claim 1 are novel relative to the dump truck disclosed by CA 1 049 062 A.

GB 2 264 468 A, WO 2008/078139 A1, and DE 103 00 393 B3 are acknowledged as further prior art.

An objective of the present invention is to provide a vehicle that is improved relative to the prior art and wherein at least one of the above stated problems is obviated.

Said objective is achieved with the vehicle according to claim 1 of the present invention, comprising.
- a chassis assembly, comprising:
   - at least one runner configured to support a first set of wheels; and
   - at least one variable extension configured to:
      - adjust a resulting length of the vehicle;
      - at least partially support a second set of wheels; and
      - adjust a wheelbase between the first set of wheels and the second set of wheels; and
- wherein the second set of wheels is suspended by a suspension that is arranged between a first suspension support that is arranged on the runner and a second suspension support that is arranged on the extension.

The chassis is the main load bearing structural part providing rigidity to the vehicle, and it is consequently counterintuitive to the skilled person to replace an integral chassis for a chassis assembly as described above. Moreover, it is especially counterintuitive that the second set of wheels is suspended by a suspension that is arranged between a first suspension support that is arranged on the runner and a second suspension support that is arranged on the extension for multiple reasons.

Firstly, this configuration requires that the connection between the runner and the variable extension is arranged between the first and the second suspension support, while loads are transferred from the chassis to the suspension and vice versa. The proposed configuration thus prevents that the loads are transferred to an integral main load bearing structural part, but splits the chassis between two load transferring suspension supports.

Secondly, a further consequence of the proposed configuration is that it requires a redesign of the conventional placement of components, such as the (not shown) engine, cooling system, gearing, etc. These are also placed below and near the driver's cabin, i.e. near the resulting connection between the at least one runner and the at least one variable extension.

Thirdly, and closely related to the second reason in the previous paragraph, a conventional chassis design often gradually increases the horizontal width between the two runners near a front side of the vehicle, thereby providing additional space for placement of components. Applying variable extensions that are available in different lengths, prevents such a widening of the chassis if modularity is to be obtained. After all, the variable extensions need to be able to be arranged such that it extends alongside the respective runners in order to allow them to overlap and be connected. If a widening like conventional chassis were to be applied, this would require either the variable extensions to be relatively long, or extensions of different lengths having different angles of the widening. A long variable extension would prevent the proposed placement of the first and the second suspension support on the runner and the extension, respectively. Different angles of widening would require a different extension part design for each length of variable extension and would consequently greatly increase complexity when building vehicles with different lengths.

Despite the above mentioned disadvantages and related challenges to position all necessary parts in the available space while providing a reliable and strong chassis, the vehicle according to the present invention proposes a chassis assembly wherein the second set of wheels is suspended by a suspension that is arranged between a first suspension support that is arranged on the runner and a second suspension support that is arranged on the extension.

In this way, the structural part comprising the at least one runner, i.e. a chassis base, may be a relatively large component. Since this component is identical for each individual vehicle, it can be produced in forecasted large production volumes and supplied to the assembly process by "just in time" delivery without having the need to keep this component in stock. From the perspective of improving the versatility of manufacturing of a vehicle chassis that may be production order specific in dimensions, thereby maintaining optimal flexibility to meet consumer demands in ever-decreasing delivery times, it is desirable that the varying parts, i.e. the variable extensions, are as small as possibly. In this way, they may be easily transported and stored.

The extension may be variable in length and/or the extension may be variable in position relative to the runner.

The combination of the runner and the variable extension allows a vehicle manufacturer to build a modular vehicle chassis that may be adjusted to a desired length. The modular design of the vehicle chassis thus provides the opportunity to maintain optimal flexibility to meet consumer demands, wherein the extension may be used to adjust the length of the vehicle and/or of a wheelbase of the vehicle.

Preferred embodiments are the subject of the dependent claims.

The various aspects and features described and shown in the specification can be applied, individually, wherever possible. These individual aspects, and in particular the aspects and features described in the attached dependent claims, may be made subject of divisional patent applications.

In the following description preferred embodiments of the present invention are further elucidated with reference to the drawing, in which:
Figure 1 is a side view of a vehicle comprising a chassis assembly according to the invention;
Figure 2 is a perspective view of the chassis assembly of the vehicle of Figure 1;
Figure 3 is a side view of the chassis assembly of Figure 2;
Figures 4 and 5 are side views of the chassis assembly of Figure 2 with extensions of other lengths;
Figure 6 is a detailed perspective view of the chassis assembly of Figure 2 in a detached state of the runners and the extensions.
Figures 7-9 are perspective views of the extensions shown in Figures 3-5, respectively; and
Figure 10 is perspective exploded view of the vehicle assembly of Figure 2 and a front wheel suspension.

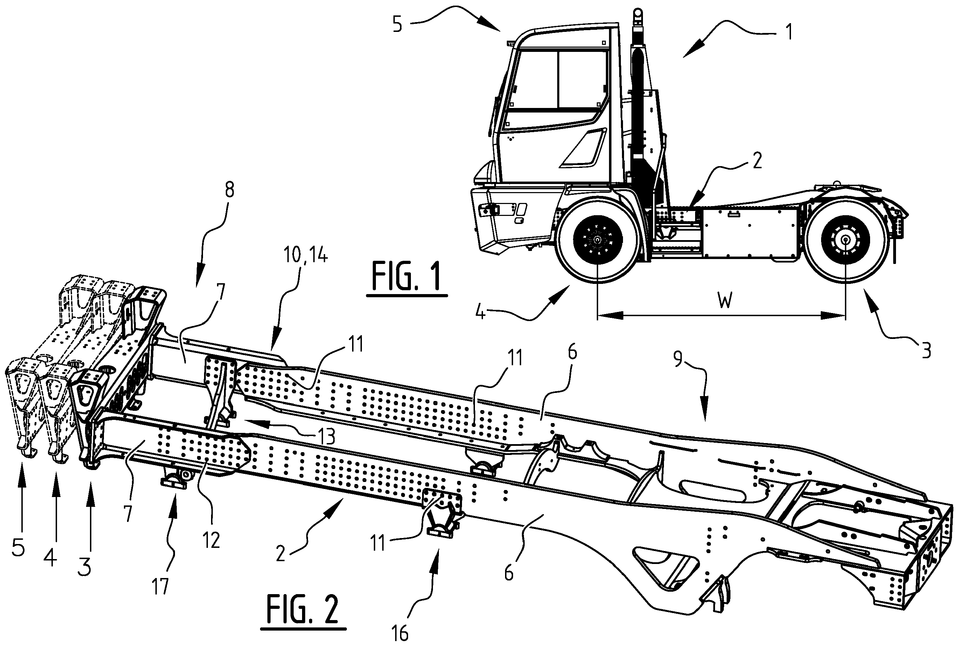

Figure 1 shows a vehicle 1, more in particular a Terminal tractor, having a vehicle chassis assembly 2 that supports a first set of wheels 3, a second set of wheels 4 and a driver's cabin 5. The first set of wheels 3 is a set of rear wheels, and the second set of wheels 4 is a set of front wheels. The chassis assembly 2 is configured to support the driver's cabin 5 and an engine and possibly a number of fixation points for a (not shown) fifth wheel assembly and (optional) lifting frame.

The chassis assembly 2 comprises at least one runner 6 and at least one variable extension 7 that is configured to adjust a resulting length of the vehicle 1. In the shown embodiment, the chassis assembly 2 comprises two runners 6 that extend substantially parallel relative to each other in a longitudinal direction of the vehicle 1. The two runners 6 are each connected to a respective extension 7.

Flexibility of the modular chassis assembly 2 may be obtained by a variability of the extension 7 in length and/or position relative to the runner 6. The extension 7 is configured to support the drivers cabin 5 in an assembled state of the chassis assembly 2, i.e. when the runner 6 and variable extension 7 are connected to each other.

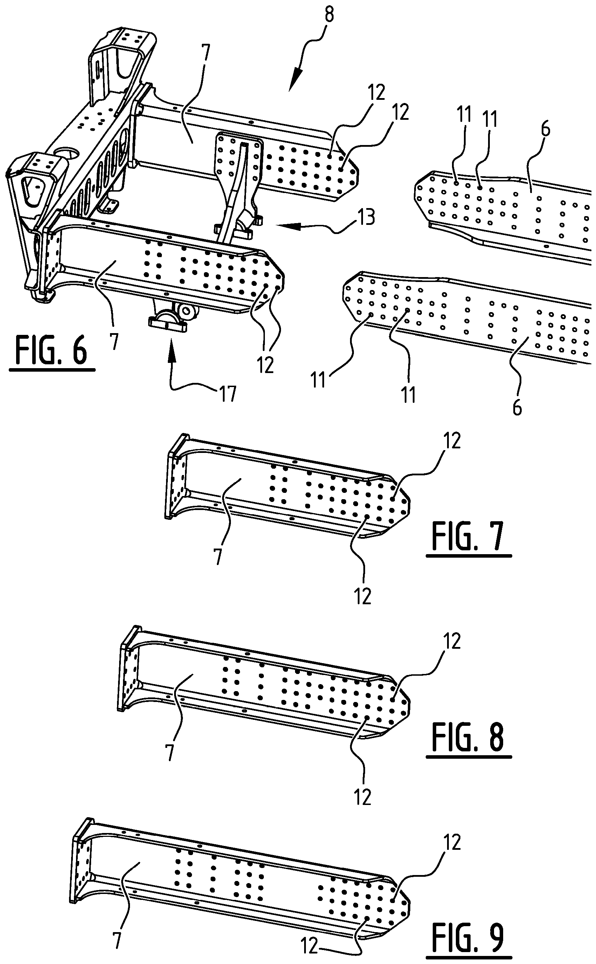

For example, the extension 7 may be variable in length. As shown in Figure 2 and Figures 3-5 and 7-9, the extensions 7 may be available in different pre-selected lengths. Such extensions 7, which may be part of a chassis extension 8, may be easily kept in stock, since they are rather limited in size. The runners 6 may be part of a chassis base 9, which is far more bulky. Since the chassis base 9 is identical for each individual vehicle, this component can be produced in forecasted large production volumes and supplied to the assembly process by "just in time" delivery without having the need to keep this component in stock.

As an alternative or in addition to the extension being selectable from a number of extensions 7 of differing pre-selected lengths, the extension 7 may also be variable in position relative to the runner 6. For example, an overlap 10 between the runner 6 and the extension 7 may be adjustable. The runner 6 and extension 7 may each comprise a number of through holes 11, 12 that may be aligned in a plurality of overlap positions. Not shown bolt connections may extend through the through holes 11, 12 to connect the extension 7 to the runner 6.

The at least one runner 6 of the shown embodiment is configured to support the first set of wheels 3. The extension 7 is configured to at least partially support a second set of wheels 4. In the shown embodiment, the first set of wheels 3 is a set of rear wheels, and the second set of wheels 4 is a set of front wheels. In this embodiment, the variable extension is not only configured to adjust a length of the vehicle 1, but is more specifically configured to adjust a wheelbase W between the first set of wheels 3 and the second set of wheels 4, i.e. between the rear wheels and the front wheels.

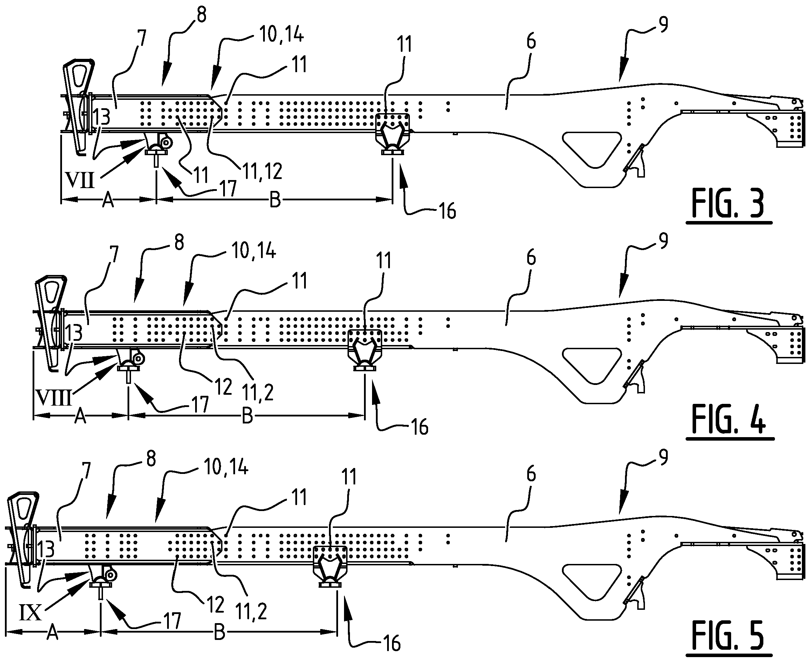

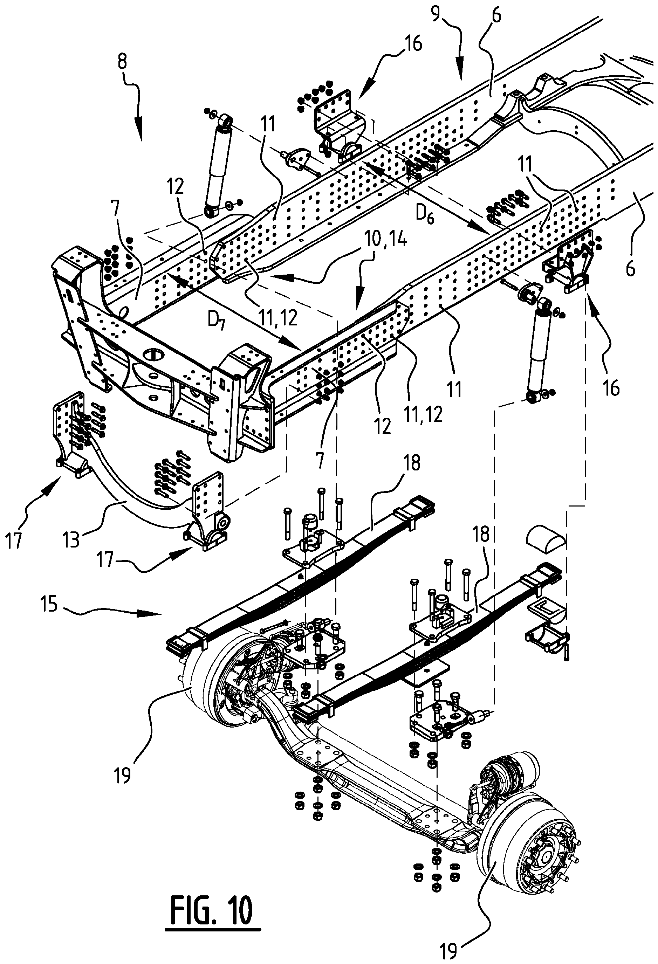

The second set of wheels 4 is suspended by suspension 15 that is arranged between a first suspension support 16 that is arranged on the runner 6 and a second suspension support 17 that is arranged on the extension 7 (Figure 10). The distance B between the first suspension support 16 and the second suspension support 17 may be constant for different lengths of the modular chassis assembly 2 as shown in Figures 3-5. This would allow a specific length of leaf springs to be used for the modular chassis assembly 2 with differing lengths. The distance A between the second suspension support 17 and a front end of the extension 7 may also be constant for different lengths of the extension 7, allowing further basic components to be arranged to the modular chassis assembly 2 independent of the length thereof. If distance A is constant, the second suspension support 17 is arranged at a constant distance to a front end of the extension 7 for extensions 7 of differing pre-selected lengths.

Preferably both A and B are held constant for modular chassis assemblies 2 comprising extensions 7 of differing pre-selected lengths, thereby resulting in correspondingly differing lengths of the modular chassis assemblies 2 as a whole. The distance A dictates the position of the driver's cabin 5 relative to the second set of wheels 4. The position of the (not shown) engine, cooling system, gearing, etc. is not only related to the position of the driver's cabin 5, but also to the position of the front wheels, i.e. the second set of wheels 4. If A and B are held constant, this allows a vehicle manufacturer to apply similar components for the driver's cabin 5, the (not shown) engine, cooling system, gearing, etc. for modular chassis assemblies 2 having differing overall lengths. Thus, if distance A and B are held constant, the same parts and configuration thereof may be used for different lengths of vehicle 1. This improves manufacturing versatility, reduces the number of components required to manufacture a variety of vehicles 1. Moreover, it also reduces the number of spare parts that need to be in stock.

If A and B are held constant, the first suspension support 16 is moved forward along the runner 6, i.e. in the direction of the extension 7, when an extension 7 with a larger length is selected. Because the distance B dictates where the suspension 15 is arranged, the wheelbase W will increase when an extension 7 with a longer length is used in the modular chassis assembly 2.

At the overlap 10, a connection 14 between the runner 6 and the extension 7 is arranged near the second set of wheels 4, i.e. near the front wheels. From a load bearing perspective it is counterintuitive to divide a modular chassis in an area between the front and rear wheels. After all, significant moments of force are transferred and absorbed by the chassis assembly 2 between the front and rear wheels. It was found that, in this area between the front and rear wheels, an optimal position for arranging the connection 14 between the runner 6 and the extension 7 is located near the second set of wheels 4, i.e. near the front wheels. This location is therefore preferred, despite that it causes new challenges. After all, due to the distance D₆ between the runners 6 in Figure 10 being less than the distance D₇ between the extensions 7, the dimensioning for connection of the many components in this area, such as a (not shown) engine, will differ for each length of vehicle chassis assembly 2.

As can be best seen in Figure 10, the second set of wheels 4, that may be connected to wheel hubs 19, is suspended by a suspension 15 that is arranged between a first suspension support 16 that is arranged on the runner 6 and a second suspension support 17 that is arranged on the extension 7. In Figure 10, the suspension 15 comprises a leaf spring 18.

Figures 3-5 show that the position of the connection 14 relative to the first suspension support 16 and the second suspension support 17 changes for varying lengths of the extension 7. In Figure 3, wherein extension 7 is relatively short, the connection 14 is arranged closer towards the second suspension support 17 than in Figures 4 and 5, showing longer extensions 7, respectively. Considering that the wheel is supported by a leaf spring 18 that is symmetrically arranged between the first and second suspension supports 16, 17, the connection 14 is further forward relative to an axle of the second wheels 4, i.e. the front set of wheels, in Figure 3 than in Figures 4 and 5. In Figure 5, the connection 14 is located just forward relative to the axle of the second wheels 4. In all Figures 3-5, the distance between the connection 14 and the first suspension support 16 that is arranged on the runner 6 is larger that the distance between the connection 14 and the second suspension support 17 that is arranged on the extension 7.

The two extensions 7 of the chassis extension 8 may be interconnected with at least one cross beam 13. This cross beam 13 may comprise the second suspension support 17.

Although it is conceivable that the length of leaf spring 18 is adjusted in correspondence with the length of the extension 7, it is possible to use the same leaf spring 18 for all configurations shown in Figures 3-5 if the first suspension support 16 is displaceable relative to the runner 6. The runner 6 preferably comprises a plurality of pre-determined attachment positions for the first suspension support 16, which may be embodied as a plurality of through holes 11.

The invention further relates to a method of adjusting a length of a vehicle, comprising the steps of:
- providing at least one runner 6;
- providing at least one extension 7; and
- assembling the runner 6 and the extension 7 to obtain a pre-determined length of the vehicle 1.

The step of providing the at least one extension 7 preferably comprises the step of selecting the extension from a selection of extensions 7 having differing pre-selected lengths that are available in stock. Such extensions 7, which may be part of a chassis extension 8, may be easily kept in stock, since they are rather limited in size. The runners 6 may be part of a chassis base 9, which is far more bulky. It is however not required to have a variety of chassis bases 9 in stock, since a large variety of chassis types may share the same chassis base 9.

The step of assembling the runner 6 and the extension 7 may comprise the step of positioning the extension 7 relative to the runner 6 to obtain the pre-determined length of the vehicle. More in particular, this may comprise the step of setting an overlap 10 between the runner 6 and the extension 7.

The method may further comprise the steps of:
- supporting a first set of wheels 3 by the at least one runner 6;
- at least partially supporting a second set of wheels 4 by the at least one extension 7; and
- setting a pre-determined wheelbase W between the first set of wheels 3 and the second set of wheels 4.

The step of at least partially supporting the second set of wheels 4 by the at least one extension 7 may comprise the steps of:
- providing a first suspension support 16 on the runner 6, and positioning said first suspension support 16 in correspondence to a desired wheelbase W;
- providing a second suspension support 17 on the extension 7;
- arranging a suspension 15 between the first suspension support 16 and the second suspension support 17; and
- suspending the second set of wheels 4 by said suspension 15.

The above described embodiment is intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. The scope of the invention is defined solely by the following claims.

## Claims

1. Vehicle, comprising:
- a chassis assembly (2), comprising:
- at least one runner (6) configured to support a first set of wheels (3); and
- at least one variable extension (7) configured to:
- adjust a resulting length of the vehicle (1);
- at least partially support a second set of wheels (4); and
- adjust a wheelbase (W) between the first set of wheels (3) and the second set of wheels (4),
**characterised in that**
- the second set of wheels (4) is suspended by a suspension (15) that is arranged between a first suspension support (16) that is arranged on the runner (6) and a second suspension support (17) that is arranged on the extension (7).

2. Vehicle according to any one of the foregoing claims, wherein the suspension comprises a leaf spring.

3. Vehicle according to any one of the foregoing claims, wherein:
- the first suspension support (16) is displaceable relative to the runner (6); and
- the runner (6) preferably comprises a plurality of pre-determined attachment positions for the first suspension support (16).

4. Vehicle according to at least one of the foregoing claims, wherein the extension (7) is variable in length and preferably selectable from a number of extensions of differing pre-selected lengths.

5. Vehicle according to claim 3, wherein the second suspension support (17) is arranged at a constant distance (A) to a front end of the extension (7) opposite the runner (6) for each length of the extension.

6. Vehicle according to claim 4 or 5, wherein a distance (B) between the first suspension support (16) and the second suspension support (17) is constant for each length of the extension (7).

7. Vehicle according to at least one of the foregoing claims, wherein:
- the extension (7) is variable in position relative to the runner (6); and
- preferably, an overlap (10) between the runner (6) and the extension (7) is adjustable.

8. Vehicle according to at least one of the foregoing claims, wherein one or more than one of:
- a connection between the runner (6) and the extension (7) is arranged near the second set of wheels (4);
- the first set of wheels (3) is a set of rear wheels;
- the second set of wheels (4) is a set of front wheels; and
- the chassis assembly (2) is configured to support a driver's cabin (5) and an engine.

9. Method of adjusting a length of a vehicle, comprising the steps of:
- providing at least one runner (6);
- providing at least one extension (7);
- assembling the at least one runner (6) and the at least one extension (7) to obtain a pre-determined length of the vehicle (1);
- supporting a first set of wheels (3) by the at least one runner (6);
- at least partially supporting a second set of wheels (4) by the at least one extension (7); and
- setting a pre-determined wheelbase (W) between the first set of wheels (3) and the second set of wheels (4),
**characterised in that** the step of at least partially supporting the second set of wheels (4) by the at least one extension (7) comprises steps of:
- providing a first suspension support (16) on the runner (6), and positioning said first suspension support (16) in correspondence to a desired wheelbase (W);
- providing a second suspension support (17) on the extension (7);
- arranging a suspension (15) between the first suspension support (16) and the second suspension support (17); and
- suspending the second set of wheels (4) by said suspension (15).

10. Method according to claim 9, wherein the step of providing the second suspension support (17) on the extension (7) comprises the step of providing the second suspension support (17) at a constant distance (A) to a front end of the extension (7) for each length of the extension (7).

11. Method according to claim 9 or 10, wherein the step of providing the first suspension support (16) on the runner (6) comprises the step of providing said first suspension support (16) at a constant distance (B) to the second suspension support (17) on the extension (7) for each length of the extension (7).

12. Method according to at least one of claims 9-11, wherein the step of providing the extension (7) comprises the step of selecting the extension (7) from a selection of extensions having differing pre-selected lengths that are available in stock.

13. Method according to at least one of claims 9-12, wherein the step of assembling the runner (6) and the extension (7) comprises the step of positioning the extension (7) relative to the runner (6) to obtain the pre-determined length of the vehicle (1).

14. Method according to at least one of claims 9-13, comprising the step of setting an overlap (10) between the runner (6) and the extension (7).

15. Method according to at least one of claims 9-14, comprising the step of adjusting the length and/or the wheelbase (W) of a vehicle (1) according to any of the claims 1-8.

## Patentansprüche

1. Fahrzeug, umfassend:
- eine Fahrgestellanordnung (2), umfassend:
- mindestens einen Läufer (6), der konfiguriert ist, um einen ersten Satz von Rädern (3) zu tragen; und
- mindestens eine variable Verlängerung (7), die konfiguriert ist zum:
- Einstellen einer resultierenden Länge des Fahrzeugs (1);
- mindestens teilweises Tragen eines zweiten Satzes von Rädern (4); und
- Einstellen einer Radbasis (W) zwischen dem ersten Satz von Rädern (3) und dem zweiten Satz von Rädern (4),
**dadurch gekennzeichnet, dass**
- der zweite Satz von Rädern (4) durch eine Aufhängung (15) aufgehängt ist, die zwischen einem ersten Aufhängungsträger (16), der an dem Läufer (6) eingerichtet ist, und einem zweiten Aufhängungsträger (17) eingerichtet ist, der an der Verlängerung (7) eingerichtet ist.

2. Fahrzeug nach einem der vorstehenden Ansprüche, wobei die Aufhängung eine Blattfeder umfasst.

3. Fahrzeug nach einem der vorstehenden Ansprüche, wobei:
- der erste Aufhängungsträger (16) relativ zu dem Läufer (6) verschiebbar ist; und
- der Läufer (6) vorzugsweise eine Vielzahl von vorbestimmten Befestigungspositionen für den ersten Aufhängungsträger (16) umfasst.

4. Fahrzeug nach mindestens einem der vorstehenden Ansprüche, wobei die Verlängerung (7) in der Länge variabel und vorzugsweise aus einer Anzahl von Verlängerungen unterschiedlicher vorausgewählter Längen auswählbar ist.

5. Fahrzeug nach Anspruch 3, wobei der zweite Aufhängungsträger (17) in einem konstanten Abstand (A) zu einem vorderen Ende der Verlängerung (7), dem Laufrad (6) gegenüberliegend, für jede Länge der Verlängerung eingerichtet ist.

6. Fahrzeug nach Anspruch 4 oder 5, wobei ein Abstand (B) zwischen dem ersten Aufhängungsträger (16) und dem zweiten Aufhängungsträger (17) für jede Länge der Verlängerung (7) konstant ist.

7. Fahrzeug nach mindestens einem der vorstehenden Ansprüche, wobei:
- die Verlängerung (7) in der Position relativ zu dem Läufer (6) variabel ist; und
- vorzugsweise eine Überlappung (10) zwischen dem Läufer (6) und der Verlängerung (7) einstellbar ist.

8. Fahrzeug nach mindestens einem der vorstehenden Ansprüche, wobei eines oder mehrere als eines von:
- eine Verbindung zwischen dem Läufer (6) und der Verlängerung (7) in der Nähe des zweiten Satzes von Rädern (4) eingerichtet ist;
- der erste Satz von Rädern (3) ein Satz von Hinterrädern ist;
- der zweite Satz von Rädern (4) ein Satz von Vorderrädern ist; und
- die Fahrgestellanordnung (2) konfiguriert ist, um ein Fahrerhaus (5) und einen Motor zu tragen.

9. Verfahren zum Einstellen einer Länge eines Fahrzeugs, umfassend die Schritte:
- Bereitstellen mindestens eines Läufers (6);
- Bereitstellen mindestens einer Verlängerung (7);
- Anordnen des mindestens einen Läufers (6) und der mindestens einen Verlängerung (7), um eine vorbestimmte Länge des Fahrzeugs (1) zu erhalten;
- Tragen eines ersten Satzes von Rädern (3) durch den mindestens einen Läufer (6);
- mindestens teilweises Tragen eines zweiten Satzes von Rädern (4) durch die mindestens eine Verlängerung (7); und
- Einstellen einer vorbestimmten Radbasis (W) zwischen dem ersten Satz von Rädern (3) und dem zweiten Satz von Rädern (4),
**dadurch gekennzeichnet, dass** der Schritt des mindestens teilweisen Tragens des zweiten Satzes von Rädern (4) durch die mindestens eine Verlängerung (7) die Schritte umfasst:
- Bereitstellen eines ersten Aufhängungsträgers (16) an dem Läufer (6) und Positionieren des ersten Aufhängungsträgers (16) entsprechend einer gewünschten Radbasis (W);
- Bereitstellen eines zweiten Aufhängungsträgers (17) an der Verlängerung (7);
- Einrichten einer Aufhängung (15) zwischen dem ersten Aufhängungsträger (16) und dem zweiten Aufhängungsträger (17); und
- Aufhängen des zweiten Satzes von Rädern (4) durch die Aufhängung (15).

10. Verfahren nach Anspruch 9, wobei der Schritt des Bereitstellens des zweiten Aufhängungsträgers (17) an der Verlängerung (7) den Schritt des Bereitstellens des zweiten Aufhängungsträgers (17) in einem konstanten Abstand (A) zu einem vorderen Ende der Verlängerung (7) für jede Länge der Verlängerung (7) umfasst.

11. Verfahren nach Anspruch 9 oder 10, wobei der Schritt des Bereitstellens des ersten Aufhängungsträgers (16) an dem Läufer (6) den Schritt des Bereitstellens des ersten Aufhängungsträgers (16) in einem konstanten Abstand (B) zu dem zweiten Aufhängungsträger (17) an der Verlängerung (7) für jede Länge der Verlängerung (7) umfasst.

12. Verfahren nach mindestens einem der Ansprüche 9 bis 11, wobei der Schritt des Bereitstellens der Verlängerung (7) den Schritt des Auswählens der Verlängerung (7) aus einer Auswahl von Verlängerungen umfasst, die unterschiedliche vorausgewählte Längen aufweisen, die auf Lager verfügbar sind.

13. Verfahren nach mindestens einem der Ansprüche 9 bis 12, wobei der Schritt des Anordnens des Läufers (6) und der Verlängerung (7) den Schritt des Positionierens der Verlängerung (7) relativ zu dem Läufer (6) umfasst, um die vorbestimmte Länge des Fahrzeugs (1) zu erhalten.

14. Verfahren nach mindestens einem der Ansprüche 9 bis 13, umfassend den Schritt des Einstellens einer Überlappung (10) zwischen dem Läufer (6) und der Verlängerung (7).

15. Verfahren nach mindestens einem der Ansprüche 9 bis 14, umfassend den Schritt des Einstellens der Länge und/oder der Radbasis (W) eines Fahrzeugs (1) nach einem der Ansprüche 1 bis 8.

## Revendications

1. Véhicule, comprenant :
- un ensemble châssis (2), comprenant :
- au moins un longeron (6) conçu pour supporter un premier train de roues (3) ; et
- au moins une extension variable (7) conçue pour :
- ajuster une longueur résultante du véhicule (1) ;
- supporter au moins partiellement un second train de roues (4) ; et
- ajuster un empattement (W) entre le premier train de roues (3) et le second train de roues (4),
**caractérisé en ce que**
- le second train de roues (4) est suspendu par une suspension (15) qui est agencée entre un premier support de suspension (16) qui est agencé sur le longeron (6) et un second support de suspension (17) qui est agencé sur l'extension (7).

2. Véhicule selon l'une quelconque des revendications qui précèdent, dans lequel la suspension comprend un ressort à lame.

3. Véhicule selon l'une quelconque des revendications qui précèdent, dans lequel :
- le premier support de suspension (16) est déplaçable par rapport au longeron (6) ; et
- le longeron (6) comprend de préférence une pluralité de positions de fixation prédéterminées pour le premier support de suspension (16).

4. Véhicule selon au moins l'une des revendications qui précèdent, dans lequel l'extension (7) est de longueur variable et de préférence sélectionnable parmi un certain nombre d'extensions de longueurs présélectionnées différentes.

5. Véhicule selon la revendication 3, dans lequel le second support de suspension (17) est agencé à une distance constante (A) par rapport à une extrémité avant de l'extension (7) opposée au longeron (6) pour chaque longueur de l'extension.

6. Véhicule selon la revendication 4 ou 5, dans lequel une distance (B) entre le premier support de suspension (16) et le second support de suspension (17) est constante pour chaque longueur de l'extension (7).

7. Véhicule selon au moins l'une des revendications qui précèdent, dans lequel :
- l'extension (7) est de position variable par rapport au longeron (6) ; et
- de préférence, un chevauchement (10) entre le longeron (6) et l'extension (7) est ajustable.

8. Véhicule selon au moins l'une des revendications qui précèdent, dans lequel un ou plus d'un parmi :
- une liaison entre le longeron (6) et l'extension (7) est agencée près du second train de roues (4) ;
- le premier train de roues (3) est un train de roues arrière ;
- le second train de roues (4) est un train de roues avant ; et
- l'ensemble châssis (2) est conçu pour supporter une cabine (5) du conducteur et un moteur.

9. Procédé d'ajustement d'une longueur d'un véhicule, comprenant les étapes consistant à :
- fournir au moins un longeron (6) ;
- fournir au moins une extension (7) ;
- assembler l'au moins un longeron (6) et l'au moins une extension (7) pour obtenir une longueur prédéterminée du véhicule (1) ;
- supporter un premier train de roues (3) par l'au moins un longeron (6) ;
- supporter au moins partiellement un second train de roues (4) par l'au moins une extension (7) ; et
- régler un empattement (W) prédéterminé entre le premier train de roues (3) et le second train de roues (4),
**caractérisé en ce que** l'étape consistant à supporter au moins partiellement le second train de roues (4) par l'au moins une extension (7) comprend les étapes consistant à :
- fournir un premier support de suspension (16) sur le longeron (6), et positionner ledit premier support de suspension (16) en correspondance avec un empattement (W) souhaité ;
- fournir un second support de suspension (17) sur l'extension (7) ;
- agencer une suspension (15) entre le premier support de suspension (16) et le second support de suspension (17) ; et
- suspendre le second train de roues (4) par ladite suspension (15).

10. Procédé selon la revendication 9, dans lequel l'étape de fourniture du second support de suspension (17) sur l'extension (7) comprend l'étape de fourniture du second support de suspension (17) à une distance constante (A) par rapport à une extrémité avant de l'extension (7) pour chaque longueur de l'extension (7).

11. Procédé selon la revendication 9 ou 10, dans lequel l'étape de fourniture du premier support de suspension (16) sur le longeron (6) comprend l'étape de fourniture dudit premier support de suspension (16) à une distance constante (B) par rapport au second support de suspension (17) sur l'extension (7) pour chaque longueur de l'extension (7).

12. Procédé selon au moins l'une des revendications 9 à 11, dans lequel l'étape de fourniture de l'extension (7) comprend l'étape de sélection de l'extension (7) parmi une sélection d'extensions ayant des longueurs présélectionnées différentes qui sont disponibles en stock.

13. Procédé selon au moins l'une des revendications 9 à 12, dans lequel l'étape d'assemblage du longeron (6) et de l'extension (7) comprend l'étape de positionnement de l'extension (7) par rapport au longeron (6) pour obtenir la longueur prédéterminée du véhicule (1).

14. Procédé selon au moins l'une des revendications 9 à 13, comprenant l'étape de définition d'un chevauchement (10) entre le longeron (6) et l'extension (7).

15. Procédé selon au moins l'une des revendications 9 à 14, comprenant l'étape d'ajustement de la longueur et/ou de l'empattement (W) d'un véhicule (1) selon l'une quelconque des revendications 1 à 8.
